# EUROPÄISCHE PATENTANMELDUNG

(11) **EP 1 241 439 A2**
(43) Veröffentlichungstag der Anmeldung: **18.09.2002**
(21) Anmeldenummer: 02090051.0
(22) Anmeldetag: 08.02.2002
(51) Int. Cl.: G01B 11/00

(54) **Verfahren und Vorrichtung zum Vermessen von Profilrohren**

(30) Priorität: 16.02.2001 DE 10108812
(71) Anmelder: SMS Demag AG, 40237 Düsseldorf (DE)
(72) Erfinder: Sodemanns, Wolfgang, Dipl,-Ing., DE-41812 Erkelenz (DE); Thoelke, Karl,Dipl.Ing., DE-47906 Kempen (DE)
(74) Vertreter: Meissner, Peter E., Dipl.-Ing.

(57) **Zusammenfassung**

Die Erfindung betrifft ein Verfahren und eine Vorrichtung zum berührungslosen Ermitteln und Vermessen der Oberflächenkontur von Messobjekten, insbesondere Profilrohren mit einem Lasermeßsystem, wobei das Messobjekt und das Lasermeßsystem relativ zueinander lineare und rotatorisch bewegt werden. Um Oberflächenkonturmessungen an Profilrohren während der Fertigung durchzuführen, werden ein Verfahren und eine Vorrichtung vorgeschlagen, bei der bzw. bei dem mindestens ein Lasersensor in einer Ebene quer zur Längsachse der Profilrohres rotierend um das Profilrohr geführt wird und dabei im Reflektionsverfahren die Abstände vom Lasersensor zur Oberfläche des Profilrohres misst, dass die Messwerte zusammen mit den gleichzeitig erfassten Informationen über die Position des Lasersensors einem Rechner zugeführt werden, in dem aus den Messwerten eine geometrische Oberflächenkontur errechnet und mit einer im Rechner hinterlegten Sollwert-Oberflächenkontur verglichen und angezeigt wird.

## Beschreibung

Die Erfindung betrifft ein Verfahren und eine Vorrichtung zum berührungslosen Ermitteln und Vermessen der Oberflächenkontur von Messobjekten, insbesondere Profilrohren, bei dem mit wenigstens einem in einer Abtastebene abtastenden Lasermeßsystem die Oberfläche des jeweiligen Messobjektes abgetastet und für jeden ertasteten Punkt auf der Messobjektoberfläche dessen Position im Raum ermittelt wird, wobei während der Abtastung das jeweilige Messobjekt und das Lasermeßsystem relativ zueinander linear und rotatorisch bewegt werden

Ein Verfahren und eine Vorrichtung zur Ermittlung der Oberflächenkonturen von beliebig geformten Messobjekten ist aus der DE 197 41 730 A1 bekannt. Mit der dort vorgeschlagenen Lösung können zum Beispiel Körperkonfektionsmaße erfasst werden. Aber auch einzelne Körperteile, z.B. Hände lassen sich mit dem System erkennen, Bewegungen im Raum sind feststellbar. Schließlich können auch Gegenstände, wie Bierkästen, Objekte, wie Tunnel oder andere Innenräume mit dem bekannten System vermessen oder erfasst werden, wobei die verwendeten Lasermeßsysteme Relativbewegungen zwischen dem Meßsystem und dem jeweiligen Messobjekt auswerten.

Das bekannte System ist vielfältig für die Erfassung und Vermessung verschiedener Objekte einsetzbar. Für die Erfassung der Oberflächenkonturen von Profilrohren aber ist das System nicht ohne weiteres einsetzbar, denn dort werden besondere Anforderungen an das Messverfahren und die entsprechende Vorrichtung gestellt. Es hat sich nämlich gezeigt, dass die exakte Messung der Profilkontur eines kontinuierlich gefertigten Rohres unverzichtbar ist, weil während des Fertigungsprozesses, durch äußere Einflüsse hervorgerufen, die Maßhaltigkeit des Profilrohres oftmals Schwankungen unterliegt. Maßungenauigkeiten erfasst man derzeit durch berührungsbehaftete Messung am Profilrohr bei stillgesetzter Anlage oder offline am fertig produzierten Rohr. Zum Vermessen von Rundrohren werden auch schon stationäre oder rotierende Messköpfe eingesetzt, die im Ablichtverfahren über eine oder mehrere Achsen Durchmesser und Ovalität des Rohres ermitteln.

Die Oberflächenkonturvermessung von Profilrohren ist jedoch im Ablichtverfahren nicht möglich. Das Stillsetzen der Fertigungsanlage, z.B. einer Rohrschweißanlage, führt systematisch zur Erzeugung von Schrott, der für diese Kontrolle unvermeidbar anfällt und ist deshalb ungeeignet, mindestens aber unwirtschaftlich. Bei der Messung offline am fertigen Rohr werden Abweichungen von der Nenntoleranz zu spät bemerkt; die zwischen der Messung und Fertigwalzung hergestellten Rohre sind ggf. Ausschuss oder Minderqualität.

Der vorliegenden Erfindung liegt, ausgehend von den beschriebenen Problemen, die Aufgabe zugrunde, das Verfahren der eingangs geschilderten Art weiter zu entwickeln und eine Vorrichtung zu schaffen, mit dem bzw. der Oberflächenkonturmessungen an Profilrohren am laufenden Strang, d.h. während der Fertigung durchführbar sind, mit dem Ziel, Maßabweichungen frühzeitig zu erkennen und diese gegebenenfalls auszusteuern.

Zur Lösung der Aufgabe wird ein Verfahren vorgeschlagen, das dadurch gekennzeichnet ist, dass zum Ermitteln und Vermessen der Oberflächenkontur von Profilrohren am laufenden Rohrstrang mindestens ein Lasersensor des Lasermeßsystems in einer quer zur Längsachse der Profilrohres verlaufenden Ebene rotierend um das Profilrohr geführt wird und dabei im Reflektionsverfahren die Abstände vom Lasersensor zur Oberfläche des Profilrohres misst, dass die erhaltenen Messwerte zusammen mit den gleichzeitig erfassten Informationen über die dem jeweiligen Messpunkt zugeordnete Position des Lasersensors einem Rechner zugeführt werden, in dem mit Hilfe einer Auswertesoftware aus den Messwerten eine geometrische Oberflächenkontur errechnet wird, die mit einer im Rechner hinterlegten Sollwert-Oberflächenkontur verglichen wird, wobei Abweichungen vom Sollwert angezeigt werden.

Das vorgeschlagene Verfahren lässt sich vorteilhaft online während des laufenden Bearbeitungs- und oder Herstellprozesses ausführen, so dass ein Stillstand der Anlage mit dem sich dadurch unvermeidbar ergebendem Schrottanfall vermieden wird. Durch das Anzeigen von Sollwertabweichungen können Fehler schnell erkannt und ihrer Ursache kann gegengesteuert werden.

Das erfindungsgemäße Verfahren lässt sich besonders günstig in Längsnahtrohrschweißanlage zum Herstellen von Profilrohren einsetzen, wenn nach einem anderen Merkmal der Erfindung die am Auslauf der Längsnahtrohrschweißanlage hinter dem Maßwalzwerk erfassten und im Rechner verarbeiteten Messwerte bei Abweichungen vom vorgegebene Sollwert Grenzwertsignale ausgeben und Stellgrößen generieren, die Online zum Aussteuern der Sollwertabweichungen dem Regelkreis der Anstellung des Maßwalzwerkes zugeführt werden.

Durch diesen Vorschlag lässt sich ohne Stillstand der Anlage die Maßhaltigkeit messen und erfasste Unregelmäßigkeiten an außer Toleranz liegenden Profilrohren können unmittelbar während des Herstellungsprozesses ausgeregelt werden, indem das Maßwalzwerk entsprechend verstellt wird.

Die gemessenen Werte und insbesondere die Abweichungen von den vorgegebenen Sollwerten können nach einem anderen Merkmal der Erfindung visualisiert werden, d.h. vorzugsweise auf dem Bildschirm des Rechners angezeigt werden.

Eine erfindungsgemäße Vorrichtung zum berührungslosen Ermitteln und Vermessen der Oberflächenkontur von Messobjekten, insbesondere Profilrohren, ist gekennzeichnet durch eine am Auslauf einer Längsnahtrohrschweißanlage hinter dem Maßwalzwerk vorgesehene Messanordnung, mit einer das längsnahtgeschweißte Profilrohr in einer Querebene umgreifenden Umlaufbahn für mindestens einen im Reflexionsverfahren messenden Lasersensor, mit einem Positionsgeber zur Erfassung der jeweiligen Position des Lasersensors in Bezug auf das Profilrohr und mit einem Rechner zur Auswertung der von dem Lasersensor und dem Positionsgeber ermittelten Messwerte. Das längsnahtgeschweißte Profilrohr durchläuft zentral die Messanordnung, während gleichzeitig der oder die Lasersensoren das Profilrohr mindestens abschnittweise umfahren. Erfasst wird dabei im Reflexionsverfahren der Abstand des Lasersensors von der Oberfläche des Profilrohres und gleichzeitig die Position der Lasersensors bezogen auf das Messobjekt. Aus den ermittelten Werten wird im Rechner die geometrische Oberflächenkontur des Profilrohres ermittelt, das Ergebnis wird mit einem im Rechner hinterlegten Sollprofil verglichen.

In einer weiteren Ausgestaltung der Vorrichtung ist vorgesehen, den Rechner mit einem Bildschirm zur Visualisierung der Messwerte sowie zur Weiterleitung von Korrektursignalen mit dem Anstellungssteuerungssystem des Maßwalzwerkes der Längsnahtrohrschweißanlage zu verbinden. Auf diese Weise können produktionsprozessbedingte Fehler einerseits sichtbar gemacht und andererseits online ausgesteuert werden, ohne dass Messschrott oder Einstellschrott anfällt.

Vorzugsweise ist die Lasersonde oder sind die Lasersonden auf einem in der Messanordnung um die Längsachse des Profilrohres drehgelagerten Ring befestigt, der an seinem Umfang von einen richtungsumsteuerbaren Rotationsantrieb antreibbar ist. Die Lasersensoren können somit relativ einfach in einem beliebigen Winkelbetrag auf einer exakt definierten Bahn um das Profilrohr geschwenkt werden, wobei die jeweilige Position des Lasersensors einfach über die Schwenkstellung des Ringes von dem Positionsgeber erfassbar ist.

Besonders einfach zu erfassende und zu verarbeitende Werte ergeben sich, wenn nach einem günstigen Merkmal der Erfindung der Drehwinkel des drehgelagerten Ringes mindestens 360° dividiert durch die Anzahl der gleichmäßig auf dem Umfang verteilt angeordneten Lasersensoren beträgt. Das bedeutet beispielsweise bei zwei Lasersensoren einen Drehwinkel von 180°für jeden Lasersensor.

Es ist aber auch möglich, dass der Lasersensor oder die Lasersensoren über eine Zwei-oder Dreiachsen-Steuerung verfügen, und zwar für eine horizontale, vertikale und - falls erforderlich - Schwenk-Bewegung, die in der Kombination zu einer die Querebene umgreifenden Umlaufbahn führen.
Auch hierbei kann man dann mit zwei Lasersensoren auskommen, die jeweils einen Umlaufwinkel von 180° bestreichen.
Der Vorteil, der Anwendung einer Zwei - oder Dreiachsen-Steuerung ist weiterhin darin zu sehen, dass mit einer elektronischen Steuerung dieser Art nicht nur eine kreisförmige Umlaufbahn erzeugt werden kann, sondern auch andere, nichtkreisförmige Umlaufbahnen programmierbar sind.

Die Vorteile der Erfindung sind vielfältig. Vor allem lässt sich der bisher anfallende Einstellschrott vermeiden. Hinzu kommt eine höhere Ausbringung der Produktionsanlage durch weniger Stillstände, die bisher zum Messen der Profilrohre erforderlich waren. Auch ermöglicht das online Verfahren eine Qualitätsverbesserung des Endproduktes durch die Einhaltung geringerer Toleranzen. Das Verfahren mit der entsprechenden Vorrichtung gestattet schließlich eine Online-Protokollierung zum jederzeitigen Qualitätsnachweis des Produktes.

Die Erfindung soll nachfolgend unter Bezug auf die Zeichnungen erläutert werden. Dabei zeigt.

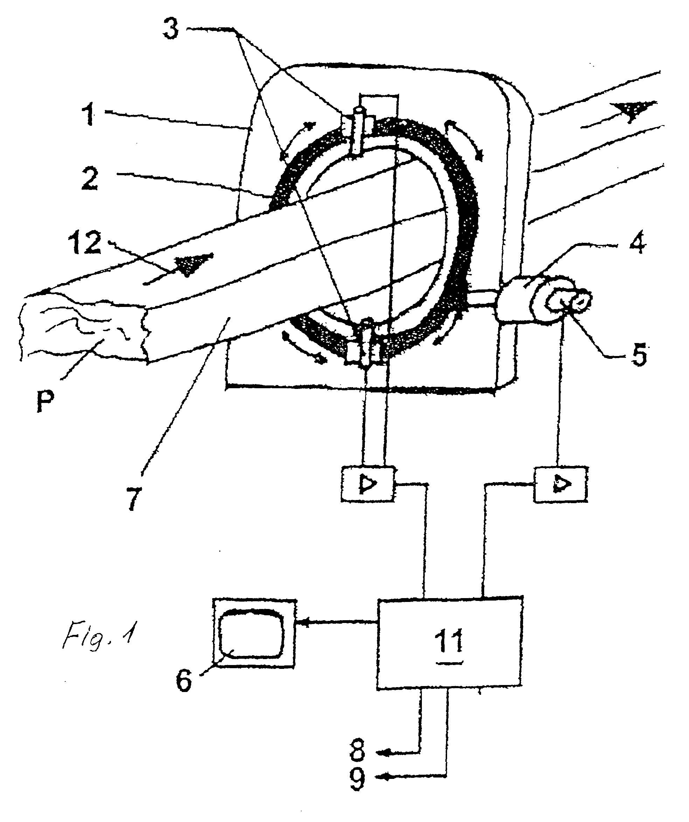

Figur 1 eine mögliche Messanordnung zur Durchführung des erfindungsgemäßen Verfahrens und
Figur 2 schematisch eine Ausführung mit zwei Dreiachsen gesteuerten Lasersensoren.

Mit 1 ist der gerüstartige Rahmen bezeichnet, in dem ein Ring 2 um seine Zentralachse drehbar gelagert ist. Der Ring 2 wird von einem Rotationsantrieb 4 in der einen oder anderen Drehrichtung angetrieben. Außerdem greift an dem Ring bzw. an dem Rotationsantrieb 4 ein Positionsgeber 5 an, mit dem die jeweilige Drehposition des Ringes 2 erfassbar ist. An dem Ring 2 sind auf dessen Umfang gleichmäßig verteilt zwei Lasersensoren 3 befestigt, die im Reflexionsverfahren den Abstand des jeweiligen Lasersensors 3 von der Oberfläche 7 des durch den Ring 2 in Bewegungsrichtung 12 hindurchgeführten Profilrohres P erfassen. Sowohl der Messwert des Lasersensors 3 wie auch der des Positionsgebers 5 werden dem Rechner 11 zugeführt, wo die Werte zu einer geometrischen Oberflächenkontur verrechnet werden. Die Auswertung wird mit einer im Rechner 11 hinterlegten Software verglichen. Das Ergebnis wird auf dem Monitor 6 visualisiert. Grenzwerte 8 werden ausgegeben und als Stellgröße 9 für den Regelkreis der Anstellung des (nicht dargestellten) Maßwalzwerkes zurückgeführt.

Obwohl bei diesem Ausführungsbeispiel eine ringförmige Rotationsebene für das Lasersystem benutzt wird, liegt es im Rahmen der Erfindung auch eine definierte andere Form der Rotation zu benutzen.

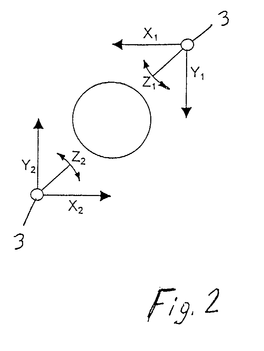

Bei der schematischen Darstellung in der Figur 2 ist angedeutet, dass die Lasersensoren eine horizontale Bewegung x, eine vertikale Bewegung y und eine Schwenkbewegung z ausführen.

## Patentansprüche

1. Verfahren zum berührungslosen Ermitteln und Vermessen der Oberflächenkontur von Messobjekten, insbesondere Profilrohren, bei dem mit wenigstens einem in einer Abtastebene abtastenden Lasermeßsystem die Oberfläche des jeweiligen Messobjektes abgetastet und für jeden ertasteten Punkt auf der Messobjektoberfläche dessen Position im Raum ermittelt wird, wobei während der Abtastung das jeweilige Messobjekt und das Lasermeßsystem relativ zueinander linear und rotatorisch bewegt werden,
**dadurch gekennzeichnet,**
**dass** zum Ermitteln und Vermessen der Oberflächenkontur von Profilrohren am laufenden Rohrstrang mindestens ein Lasersensor des Lasermeßsystems in einer quer zur Längsachse der Profilrohres verlaufenden Ebene rotierend um das Profilrohr geführt wird und dabei im Reflektionsverfahren die Abstände vom Lasersensor zur Oberfläche des Profilrohres misst, dass die erhaltenen Messwerte zusammen mit den gleichzeitig erfassten Informationen über die dem jeweiligen Messpunkt zugeordnete Position des Lasersensors einem Rechner zugeführt werden, in dem mit Hilfe einer Auswertesoftware aus den Messwerten eine geometrische Oberflächenkontur errechnet wird, die mit einer im Rechner hinterlegten Sollwert-Oberflächenkontur verglichen wird, wobei Abweichungen vom Sollwert angezeigt werden.

2. Verfahren nach Anspruch 1,
**dadurch gekennzeichnet,**
**dass** die am Auslauf einer Längsnahtrohrschweißanlage hinter dem Maßwalzwerk erfassten und im Rechner verarbeiteten Messwerte bei Abweichungen vom vorgegebene Sollwert Grenzwertsignale ausgeben und Stellgrößen generieren, die Online zum Aussteuern der Sollwertabweichungen dem Regelkreis der Anstellung des Maßwalzwerkes zugeführt werden.

3. Verfahren nach Anspruch 1 und 2,
**dadurch gekennzeichnet,**
**dass** die im Rechner ermittelten Abweichungen vom Sollwert visualisiert werden.

4. Vorrichtung zum berührungslosen Ermitteln und Vermessen der Oberflächenkontur von Messobjekten, insbesondere Profilrohren, bei dem mit wenigstens einem in einer Abtastebene abtastenden Lasermeßsystem die Oberfläche des jeweiligen Messobjektes abgetastet und für jeden ertasteten Punkt auf der Messobjektoberfläche dessen Position im Raum ermittelt wird, wobei während der Abtastung das jeweilige Messobjekt und das Lasermeßsystem relativ zueinander linear und rotatorisch bewegt werden, **gekennzeichnet durch**,
eine am Auslauf einer Längsnahtrohrschweißanlage hinter dem Maßwalzwerk vorgesehene Messanordnung (1), mit einer das längsnahtgeschweißte Profilrohr (P) in einer Querebene umgreifenden Umlaufbahn für mindestens einen im Relexionsverfahren messenden Lasersensor (3), mit einem Positionsgeber (5) zur Erfassung der jeweiligen Position des Lasersensors (3) in Bezug auf das Profilrohr (P) und mit einem Rechner (11) zur Auswertung der von dem Lasersensor (3) und dem Positionsgeber (5) ermittelten Messwerte.

5. Vorrichtung nach Anspruch 4,
**dadurch gekennzeichnet,**
**dass** der Rechner (11) mit einem Bildschirm (6) zur Visualisierung der Messwerte sowie zur Ausgabe von Korrektursignalen mit dem Anstellungssteuerungssystem des Maßwalzwerkes der Längsnahtrohrschweißanlage verbunden ist.

6. Vorrichtung nach Anspruch 4 oder 5,
**dadurch gekennzeichnet,**
**dass** der Lasersensor oder die Lasersensoren (3) auf einem in der Messanordnung (1) um die Längsachse des Profilrohres (P) drehgelagerten Ring (2) befestigt sind, der an seinem Umfang von einen richtungsumsteuerbaren Rotationsantrieb (4) antreibbar ist.

7. Vorrichtung nach einem der Ansprüche 4 bis 6,
**dadurch gekennzeichnet,**
**dass** der Drehwinkel des drehgelagerten Ringes (2) mindestens 360° geteilt durch die Anzahl der gleichmäßig auf dem Umfang verteilt angeordneten Lasersensoren (3) beträgt

8. Vorrichtung nach Anspruch 4,
**dadurch gekennzeichnet,**
**dass** der Lasersensor oder die Lasersensoren über eine Zwei - oder Dreiachsen-Steuerung verfügen, und zwar für eine horizontale, vertikale und - falls erforderlich - Schwenk-Bewegung, die in der Kombination zu einer die Querebene umgreifenden Umlaufbahn führen.
